# FASCICULE DE BREVET EUROPEEN

(11) **EP 3 145 308 B1**
(45) Date de publication et mention de la délivrance du brevet: **07.04.2021**
(21) Numéro de dépôt: 15736794.7
(22) Date de dépôt: 26.05.2015
(51) Int. Cl.: A01M 1/02, A01M 1/10, A01M 1/14, A01M 1/20

(54) **METHODE ET SYSTÈME DE CONTRÔLE ET DE COMMUNICATION DES STATUTS DE POSTES D'APPATAGE D'INSECTES**
VERFAHREN UND VORRICHTUNG ZUR KONTROLLE UND KOMMUNIKATION DES STATUS EINER INSEKTENFALLE
METHOD AND SYSTEM FOR CONTROLLING AND COMMUNICATING THE STATUS OF AN INSECT TRAP

(30) Priorité: 23.05.2014 BE 201400395
(43) Date de publication de la demande: 29.03.2017
(73) Titulaire: Simteligence SPRL, 1160 Bruxelles (BE)
(72) Inventeur: FROJMOVICS, Abraham, 1180 Bruxelles (BE)
(74) Mandataire: Office Kirkpatrick
(86) Numéro de dépôt international: PCT/EP2015/061608
(87) Numéro de publication internationale: WO 2015/177382

(56) Documents cités:
- WO-A1-03/084319
- WO-A1-2012/136647
- JP-A- H09 121 742
- US-A1- 2013 223 677

## Description

### Domaine de l'invention

L'invention concerne un dispositif ou système, et une méthode de contrôle et de communication de postes d'appâtage d'insectes, rampants et volants.

Il est nécessaire d'inspecter régulièrement l'état des appâts disposés à différents endroits à l'intérieur ou à l'extérieur d'un bâtiment afin de contrôler si des insectes nuisibles y ont touché et les remplacer, si nécessaire. Il est également nécessaire d'inspecter ceux-ci afin de contrôler le nombre d'insectes piégés et de comparer ce nombre à une valeur étalon, pour décider si le nombre des prises est significatif, afin de pouvoir le cas échéant, entreprendre des mesures d'éradication.

L'état d'inspection ainsi que de la communication des résultats doit être assurée, afin de pouvoir prendre les mesures nécessaires, tels que le réapprovisionnement des appâts, basés par exemple sur des phéromones, ainsi que l'enlèvement et l'élimination du nuisible.

### Etat de la technique

A ces fins, on connaît dans l'état de la technique l'utilisation d'appareils de prise d'images fixes ou animées qui sont envoyés vers le serveur, soit par le biais de l'internet ou de système de communication cellulaire, tel que le GSM ou le GPRS.

On connaît également dans l'état de la technique l'utilisation de système par lequel les insectes sont comptés un par un, lorsqu'ils s'introduisent dans un tunnel.

Le document de brevet WO 03/084319 A1 décrit un système dans lequel un comptage est effectué par détection de passages individuels de chaque insecte dans un champ qui se trouve entre une source lumineuse et un composant électronique qui enregistre l'amenuisement de la lumière causé par le passage de l'insecte.

Un autre dispositif pour le contrôle d'au moins un poste d'appâtage pour insectes est connu du document de brevet WO 2012/136647 A1.

Les méthodes de la technique antérieure présentent des désavantages.

Un premier désavantage est la nécessité de transmettre des fichiers de données volumineux à intervalle régulière au serveur à des fins d'analyse. Ces transmissions peuvent de par leur volume être interrompues, pour cause d'encombrement sur les lignes de télécommunication ou bien peuvent ne pas être envoyées, par manque de bande passante.

Un second désavantage réside dans le fait que des données doivent être envoyées à intervalle régulière vers le serveur, à des fins de vérification. Cette procédure augmente le degré du désavantage cité auparavant.

Un troisième désavantage est le besoin de vider régulièrement les pièges de ses insectes capturés, afin de pouvoir photographier une cible qui n'est pas saturée.

Un quatrième désavantage est le besoin de renouveler régulièrement les pièges d'appâts, tels que des phéromones, étant donné que ceux-ci ont une durée d'efficacité limitée.

Le comptage par passage devant une source lumineuse comporte également un désavantage dans la mesure où il y a un risque de comptage multiple pour chaque insecte. L'insecte peut passer plusieurs fois entre l'ensemble entre la source de lumière et le détecteur, notamment en fonction de sa vivacité, et donc de fausser la mesure.

### Résumé de l'invention

Un but de l'invention est de proposer une méthode afin d'estimer le nombre d'insectes dans un appareil de détection lui-même, au lieu de communiquer des données non analysées, comme par exemple des images prise par un dispositif photographique vers le serveur, afin que ce dernier fasse une analyse.

A cette fin, la méthode, le système ou le dispositif selon l'invention comprend un poste d'appatâge de préférence muni d'un module de télécommunication de téléphonie mobile autonome, qui peut se composer d'un modem de téléphonie cellulaire, de communication satellitaire ou de télécommunication sans fil, ou tout autre forme de télécommunication, ainsi qu'un circuit électronique, par exemple une carte à circuit imprimé ou une puce électronique, comportant entre autres une mémoire et un processeur.

L'invention est caractérisée par le fait que le nombre d'insectes est estimé par la mesure de l'opacité d'un réceptacle transparent ou translucide, opacité causé par les insectes piégés, le réceptacle étant associé d'une part à une source de lumière diffuse et d'autre part un senseur ou détecteur, de telle sorte que la lumière inonde ledit réceptacle.

L'intensité de la lumière captée par le senseur dépendra du type d'insectes piégés et du nombre de ceux-ci.

L'invention propose donc de mesurer l'intensité lumineuse dans un réceptacle-piège, intensité qui varie selon le nombre d'insectes se trouvant piégés sur la paroi translucide entre cette source de lumière et un senseur optique.

A cette fin, la méthode, le système ou le dispositif selon l'invention comprend un poste d'appâtage muni d'un réceptacle qui collecte les insectes capturés. Selon un mode de réalisation simplifié, celui-ci est caractérisé par une base plane, réalisée en matière translucide.

Sous cette base translucide se trouve une source de lumière qui s'illumine périodiquement, selon une programmation préétablie, qui peut également être programmée à distance, par le biais d'un système embarqué de télécommunication.

Le réceptacle est réalisé au moins partiellement en matière transparente ou translucide, permettant à un composant électronique mesurant l'intensité de lumière, tel qu'une photo diode, ou tout autre type de composant pouvant mesurer l'intensité de la lumière, de réaliser cette mesure.

L'intensité de la lumière mesurée, est dépendante de l'opacité produite par les insectes capturés dans le réceptacle.

La méthode selon l'invention permet le comptage d'insectes dont le nombre varie selon la mesure de l'opacité du réceptacle causé par les insectes qui y sont piégés. De préférence il y a plusieurs réceptacles. Par ailleurs chaque réceptacle peut contenir une phéromone spécifique qui attire exclusivement un insecte spécifique. Selon cette approche, l'appareil de capture est programmé spécifiquement pour chaque type d'insecte, permettant un comptage précis, en rapport à l'opacité mesurée.

L'invention propose dès lors aussi la mise en batterie des réceptacles, afin de permettre la présentation périodique d'un réceptacle vide d'insectes, et de mettre les réceptacles pleins par exemple à la disposition ultérieure d'un service de nettoyage afin d'en éliminer le contenu.

A cette fin, selon un mode de réalisation, la méthode, le système ou le dispositif selon l'invention est caractérisé en ce qu'une série de réceptacles reposent sur une plateforme en forme de disque qui tourne d' un certain nombre de degrés autour d'un axe et présente périodiquement un réceptacle vide. L'axe du disque est entraîné par un moteur qui tourne de sorte à présenter le réceptacle vide pour un examen de son contenu.

Le moteur est de préférence géré à distance par le biais du système de télécommunication embarqué, afin de présenter le réceptacle désiré en temps et à heure.

L'invention concerne donc aussi la mise en batterie des réceptacles, afin de permettre l'utilisation de produits attractifs différents par exemple des phéromones différentes, selon la nécessité.

Selon un mode de réalisation, la phéromone est contenue de manière connue dans la matière, p.e. plastique, de laquelle est composé le réceptacle.

En effet, selon un aspect de l'invention, on propose aussi un système de détection du nombre d'insectes nuisibles ou non, volants ou rampants, pour les animaux, les humains, les plantes, les aliments ou les objets, par l'utilisation de phéromone comme appât.

Selon un aspect de l'invention, le dispositif est prévu pour analyser le contenu en insectes de plusieurs réceptacles de manière séquentielle.

Dans ce but on prévoit un disque de rotation supportant plusieurs réceptacles. La rotation du disque permet de changer le réceptacle à analyser présenté à la station de détection.

Selon un mode de réalisation, on utilise une bande adhésive couvrant l'ouverture du réceptacle mais se détachant automatiquement afin que celui-ci puisse être exposé aux insectes. L'utilisation d'une bande adhésive qui se détache améliore la durée d'efficacité de la phéromone ou autre produit attractif se trouvant à l'intérieur du réceptacle.

A cette fin, la méthode, le système ou le dispositif est caractérisé en ce que la rotation du disque causant le changement des réceptacles, décolle par son mouvement giratoire ladite bande adhésive, qui obstrue par défaut le dispositif d'accès des insectes au réceptacle.

D'autres dispositifs ou moyens équivalents peuvent être concus pour ouvrir le réceptacle et l'exposer aux insectes de manière contrôlée. Le moyen peut être un couvercle basculant lors de la rotation du disque sous l'effet mécanique d'un élément fixe de la station d'analyse.

Selon encore un autre aspect de l'invention, on prévoit que la la paroi intérieure des réceptacles est enduite d'une matière lubrifiante de type polytétrafluoroéthylène afin d'empêcher les tentatives d'échappement des insectes.

Un autre mode de réalisation fait appel à un ensemble de réceptacles qui ont chacun la forme d'un prisme droit apte à tourner autour d'un axe extérieur, p.e. vertical, prévu parallèle à une arête desdits prismes, et comportant un détecteur de lumière (diode optique) dans un boîtier comprenant également des ouvertures antérieures et postérieures aptes à coincider avec les extrémités ouvertes d'un et d'un seul des réceptacles lors du mouvement de rotation.

Les réceptacles accolés, si une face est convexe, peuvent ainsi former un ensemble cylindrique apte à tourner autour de son axe. Périodiquement, le système de renouvellement des réceptacles d'insectes, comme il est décrit dans le présente invention, imprime un mouvement de rotation à l'ensemble des réceptacles.

Lors du mouvement de rotation au moins une face du prisme droit prévu transparent ou translucide est exposé à une ou de préférence un ensemble de diodes émettrices de lumière, extérieures mais intégré dans un compartiment du boîtier, illuminant le réceptacle et donc le détecteur (senseur) de lumière. Cette source lumineuse se trouve dans un compartiment du boitier dont la face supérieure est translucide.

La paroi intérieure des réceptacles, du côté directement exposé aux diodes émettrices, comprend une substance collante apte à piéger les insectes.

Les insectes s'introduisent par la face antérieure ou postérieure dans le prisme droit. Certains insectes se posent sur la base encollée et sont ainsi piégés, provoquant un changement lors de la mesure de l'illumination dans le réceptacle.

Chaque réceptacle ou piège peut être accédé ou remplacé individuellement, en particulier lorsqu'il y a lieu de renouveler le produit attractif ou échanger le réceptacle qui est saturé en insectes. Ils peuvent avantageusement se présenter sous la forme de cartouches en matière diverses, p.e. partiellement en carton, éventuellement jetables.

L'invention concerne aussi le logiciel qui interprète et gère les signaux enregistrés, tels que la capture d'un nuisible, d'une indication de charge minimale de la batterie et tout autre paramètre enregistré et transmet ceux-ci au modem pour sa retransmission au serveur.

L'invention concerne plus particulièrement l'algorithme qui établi la relation entre l'opacité mesurée de la source de lumière causée par le volume des insectes et le nombre d'insectes spécifiques attirés dans le piège pendant une période déterminée.

A cette fin, la méthode, le système ou le dispositif est caractérisé par l'utilisation d'une base de données sauvegardée dans la mémoire de l'appareil qui contient les noms de divers insectes correspondant à une valeur numérique spécifique, liée à l'opacité de chaque insecte spécifique lorsqu'on la soumet à une source de lumière et qu'on mesure la lumière résiduelle du côté opposé à cette source. Il s'agit dès lors d'une liste, d'une base de données ou d'une ou plusieurs courbes d'étalonnage ou de calibration associant au nombre et au type d'insectes une valeur d'opacité pour un temps d'exposition donné.

A cette fin, la méthode, le système ou le dispositif est caractérisé en ce que chaque mesure d'opacité est sauvegardée en mémoire de l'appareil et dont la valeur est comparée au nombre d'insectes relatifs à une opacité spécifique à chaque type d'insecte.

A cette fin, la méthode est caractérisée en ce que après chaque mesure d'insectes, soit comparée avec un nombre pré-établi d'insectes définis comme étant la valeur correspondante à une infestation. Lorsque cette valeur est atteinte, l'appareil envoie un message d'alarme au serveur.

L'invention concerne aussi un logiciel qui interprète et gère les signaux obtenus du serveur, afin de piloter à distance les diverses fonctions du piège.

L'invention concerne aussi la communication des données par le biais de transmission par voie satellitaire.

L'invention concerne aussi la gestion de la télécommunication, permettant l'envoi des messages par voie de communication satellitaire et réseaux cellulaires, selon la disponibilité de l'un ou de l'autre méthode de transmission.

A cet effet, selon encore un autre mode de réalisation de l'invention, à chaque envoi d'un message au serveur, le système de gestion embarquée vérifie au préalable la disponibilité de réseau de télécommunication cellulaire ou satellitaire et expédie le message selon le mode de communication disponible et le moins onéreux. Les modes de communications préférés sont sauvegardés en mémoire de l'appareil.

Dans une réalisation particulière le poste d'appâtage est destiné à des insectes vecteurs de maladies pour l'être humain ainsi que pour des animaux et est équipé d'un système de détection d'insectes de gestion et de transmission des données y afférant, selon l'invention.

Dans une réalisation particulière le poste d'appâtage est également destiné à diffuser un produit de lutte ou d'éradication de l'insecte.

A cet effet, la méthode, le système ou le dispositif est caractérisé en ce qu'un produit de lutte ou d'éradication est diffusé à distance, lorsque un degré d'infestation est enregistré.

### Brève description des figures

Ces aspects ainsi que d'autres aspects de l'invention seront davantage expliqués dans la description qui suit des modes de réalisation particuliers de l'invention, référence étant faite aux figures schématiques annexées, dans lesquelles :
La Fig. 1 constitue un schéma général illustrant un dispositif selon l'invention.
La Fig 2. montre schématiquement l'introduction d'un insecte volant dans un piège. Attiré par la phéromone qui se trouve dans le réceptacle 5, il s'introduit par l'ouverture 1 et continue son cheminement, toujours attiré par la phéromone par l'entonnoir qui le guide naturellement vers la jonction entre l'entonnoir et la cheminée 4, qui est solidaire du réceptacle.

Dès l'entrée de l'insecte dans le réceptacle 5, il est piégé, étant donné qu'il n'a plus d'appui pour prendre son envol.

Naturellement, l'insecte essaye de monter les parois du réceptacle. Celles-ci sont recouvertes d'une matière glissante de type polytétrafluoroéthylène qui rendent ces tentatives difficiles, voire les empêchent totalement.

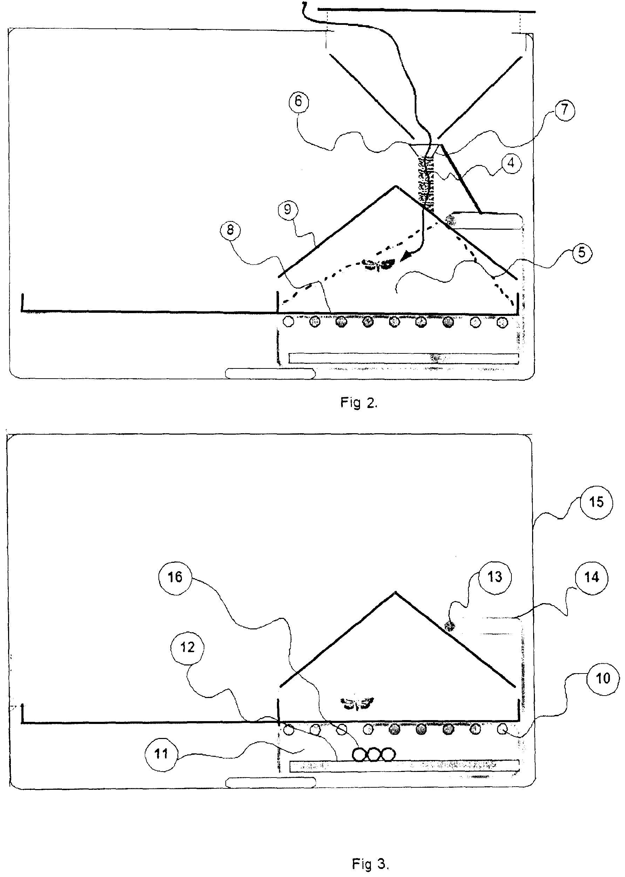

La Fig 3. montre schématiquement la partie du système qui prend en charge le contrôle du nombre d'insectes piégés, par le biais de la mesure de l'opacité créée par le nombre d'insectes dans le réceptacle 5.

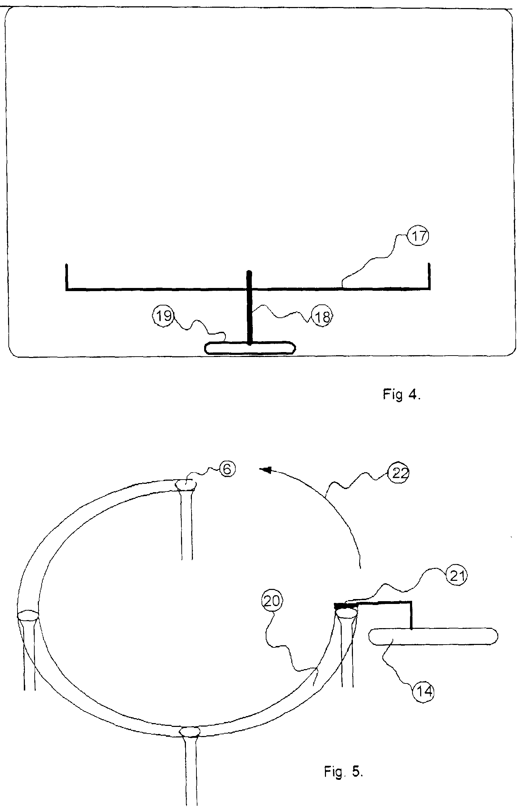

La Fig 4. montre schématiquement le système de rotation du plateau des réceptacles qui causent périodiquement l'évacuation des insectes contrôlés et le renouvellement ou le changement du type de phéromone.

La Fig 5. montre schématiquement en perspective le système d'ouverture automatique des accès aux réceptacles, permettant l'échappement du parfum de la phéromone, par le biais d'une bande adhésive qui se détache partiellement et automatiquement à chaque mouvement de rotation du plateau des réceptacles.

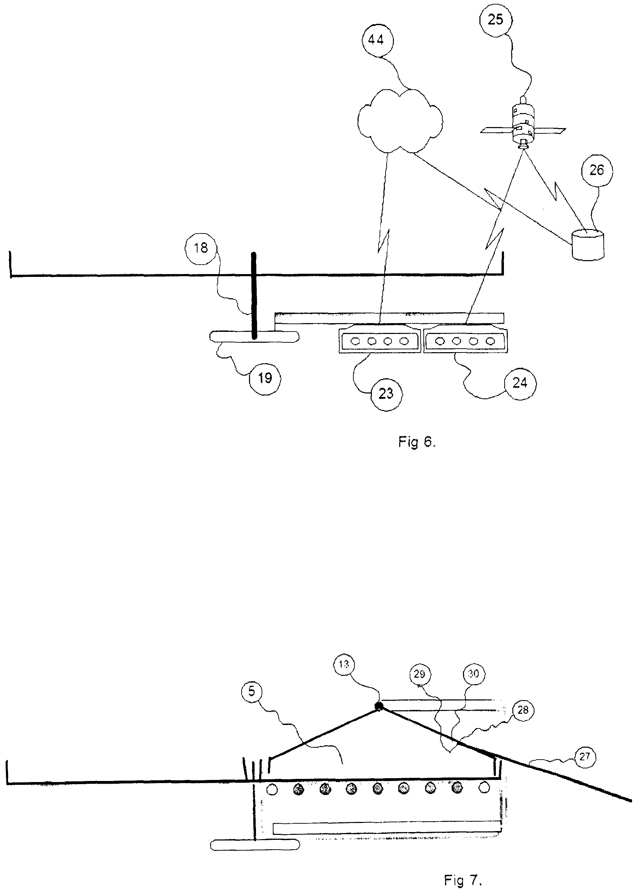

La Fig 6. montre le moteur qui entraîne le mouvement giratoire du plateau des réceptacles, le dispositif de gestion électronique embarqué, qui gère le dispositif ainsi que la télécommunication avec le serveur, par le biais d'un système par satellite de communication.

La Fig. 7 montre une variante, telle qu'utilisée pour des insectes rampants.

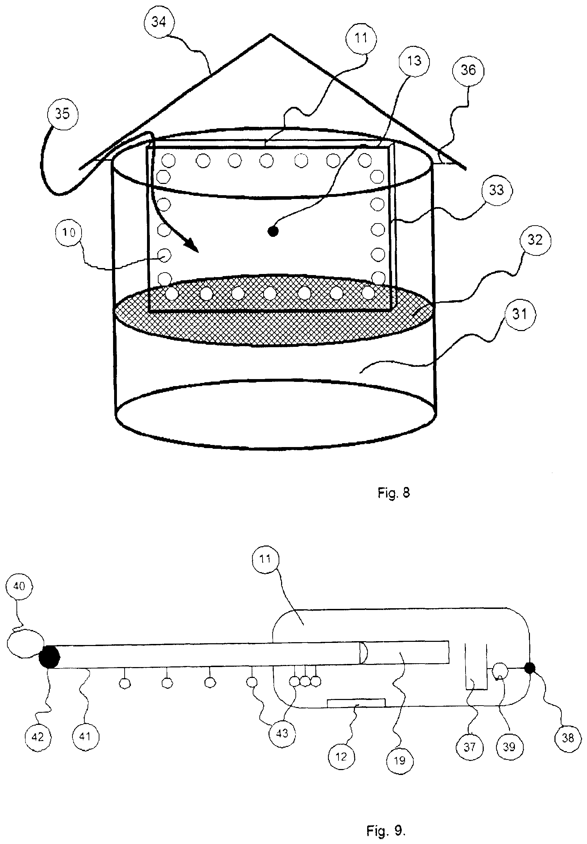

La Fig. 8. montre une variante, telle qu'utilisée pour des insectes vecteurs de maladies humaines et animales.

La Fig. 9 montre schématiquement le système de diffusion automatique d'un produit de lutte ou d'éradication.

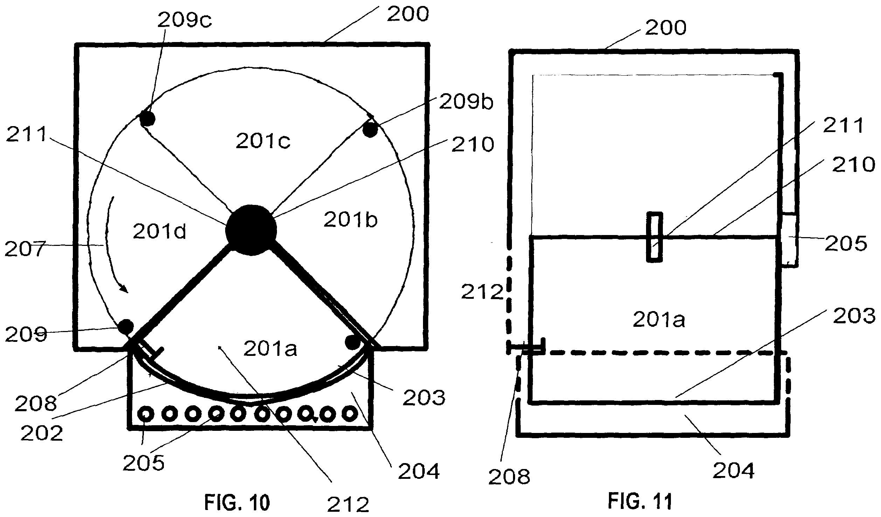

La Fig. 10 illustre schématiquement, sous forme de coupe vue de l'avant, un autre mode de réalisation d'un dispositif selon l'invention.

La Fig. 11 illustre schématiquement, une coupe du dispositif de la Fig. 10 vu de côté.

Description détaillée de modes de réalisations particuliers.

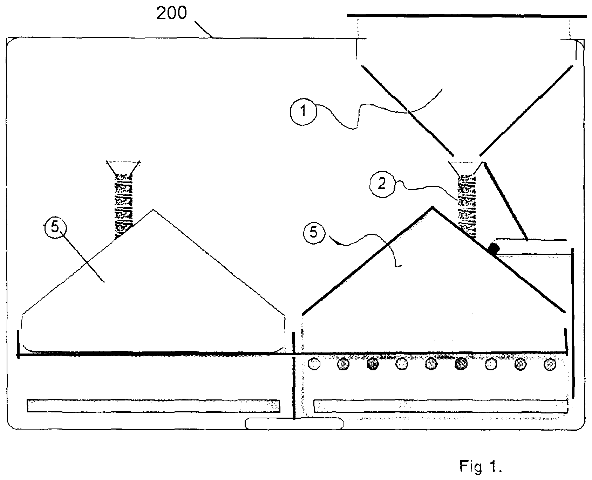

La figure 1 représente un schéma de l'ensemble du poste d'appatage (boîtier 200) qui comporte l'entonnoir 1 qui accueille les insectes à capturer, la cheminée 2 qui est le sas empêchant le retour des insectes capturés. Le cône renversé 5 est le réceptacle où les insectes capturés sont comptés. Ce cône renversé, repose sur un disque giratoire qui permet le changement de positionnement des cônes à des moments précis afin d'éliminer automatique les insectes capturés et qui règle également de manière automatique, le changement éventuel de phéromone.

Sous le disque giratoire se trouve un compartiment qui comprend une série de lampes de type LED ainsi qu'une carte à circuit imprimé qui assure la gestion du piège, de tous les fonctions mécaniques et électroniques. Elle comporte également un ou plusieurs modems, assurant les fonctions de télécommunication.

Ces modems peuvent être de type téléphone cellulaire, GSM, satellitaires et radio fréquence de type utilisation libre comme ISM, ou de type sous licence, comme le Bluetooth, la Wifi, et tout autre type de télécommunication sans fil.

On voit sur le dessin une réalisation avec quatre réceptacles se trouvant sur le plateau giratoire. Ce nombre peut être variable et peut donc être supérieur.

La figure 2 représente schématiquement le trajet de l'insecte s'introduisant dans le piège. Attiré par le parfum qui se dégage de la phéromone se trouvant dans le réceptacle 5 il s'introduit par l'ouverture 6 qui se trouve en haut de l'entonnoir 7 en haut de la cheminée 4.

Il s'engage par la suite dans la cheminée 4 par l'entrée 6 pour se retrouver dans le réceptacle 5. Il se pose soit sur la base 8 du réceptacle 5, soit il continue de voler dans celui-ci tant qu'il reste vivant et a de l'énergie. Dans un cas comme dans l'autre il termine sa course sur la base 8 car il n'a pas d'autre choix. Dans certains cas, il tentera de gravir la paroi 9. Celle-ci peut être recouverte, composée, ou fabriquée d'une couche de matière glissante de type polytétrafluoroéthylène.

La figure 3 illustre le fonctionnement du système sur lequel est basé le comptage périodique des insectes piégés.

Périodiquement, les lampes 10 de type LED ou autres lampes de préférence de type basse consommation pouvant produire simultanément une luminosité élevée s'allument selon un programme embarqué se trouvant dans le même boîtier 11 que la carte à circuit imprimé 12.

Les lampes sont programmées à s'allumer uniquement durant les heures obscures de la nuit, afin de ne pas avoir une interférence avec la lumière du jour, pouvant s'introduire par l'ouverture 6.

La paroi supérieure du boîtier 5 est de matière translucide, qui permet le passage de la lumière émise par les lampes 10 de type LED.

Le programme de gestion embarqué sur la carte à circuit imprimé 12 enclenche simultanément le senseur optique 13 qui se trouve sur le bras 14.

La paroi du réceptacle 9 de forme conique, est transparente, ce qui permet à la lumière de la lampe LED d'éclairer parfaitement l'intérieur du réceptacle.

Au fur et à mesure que le nombre d'insectes augmente dans le réceptacle, l'intensité de la lumière enregistrée par le senseur optique 13 est de plus en plus réduite.

Chaque insecte spécifique a une empreinte définie par la masse de son corps et produit ainsi une opacité entre la source de lumière 10 et le senseur optique 13.

La carte à circuit imprimé 12 est munie d'un support mémoire, sur lequel est sauvegardée une base de données, qui comprend une liste d'une série d'insectes.

Cette liste peut être gérée à distance par une application qui se trouve sur un serveur qui se trouve à distance ou peut être embarquée dans l'application de l'appareil.

Chaque insecte repris sur la liste, a une valeur exprimant l'opacité correspondante.

Au fur et à mesure des captures d'insectes, la mesure d'opacité périodique indique une valeur croissante en relation avec le nombre d'insectes.

Lorsque la valeur de l'opacité mesurée et en conséquence, le nombre d'insectes atteint un certain plafond préétabli, qui est repris en mémoire de la carte à circuit imprimé, un signal d'alarme est déclenché. Ce signal est ensuite transmis au serveur qui le retransmet à son tour à l'utilisateur, toujours, par voie de télécommunication.

La télécommunication entre le la carte PCB et le serveur est réalisé par voie de communication satellitaire qui peut être par exemple, de technique TDMA.

La paroi 15 de l'ensemble de l'appareil est réalisé dans une matière synthétique qui est robuste, de manière à pouvoir résister aux intempéries. Elle est également totalement opaque, afin d'assurer une totale étanchéité à la lumière extérieure, afin qu'il n'y ait aucune interférence avec la mesure d'intensité de la lumière produite par les lampes 10.

L'énergie nécessaire pour assurer le fonctionnement de la carte à circuit imprimé est fournie par les batteries ou la série de piles électriques 16 se trouvant à l'intérieur du boîtier 11.

La figure 4 illustre le fonctionnement du système de rotation du plateau 17 sur lequel sont fixés les réceptacles 5 dans lesquels les insectes sont piégés.

Le plateau est de forme circulaire et réalisé de matière synthétique au moins partiellement transparente. La transparence est nécessaire pour assurer un passage de la lumière en provenance des lampes 10 qui doit être mesurée par le senseur optique 13.

Le plateau est pourvu en son centre d' un axe 18. autour duquel pivote le plateau 17. Un moteur électrique 19 entraîne l'axe dans un mouvement giratoire. Ce moteur est pourvu d'énergie livrée par la batterie ou la série de piles 16.

Le moteur imprime périodiquement un mouvement giratoire. La périodicité ainsi que l'angle du mouvement giratoire est géré par le programme embarqué sur la carte à circuit imprimé 12.

Ce programme est également géré à distance par voie de télécommunication. L'utilisateur peut changer les paramètres de périodicité, ainsi que l'angle du mouvement giratoire localement ainsi qu'à distance.

L'angle de l'avancement du mouvement giratoire permet de placer avec précision un réceptacle spécifique de manière à ce que la cheminée d'accès du réceptacle 4. se trouve en face de la sortie de l'entonnoir supérieur d'accès 1. Cette opération sert à éliminer la série d'insectes qui a déjà été comptée et de mettre à la disposition du système un nouveau réceptacle vide aux fins d'un nouveau comptage d'insectes.

L'angle de l'avancement du mouvement giratoire permet également de placer un réceptacle 5 spécifique pourvu de la phéromone spécifique pour l'attraction d'un insecte spécifique.

La phéromone se trouve dans le réceptacle soit dans une pastille, conteneur ou tout autre support pourvu des qualités de dispersion du parfum de la phéromone, mais peut également être incorporée dans la paroi intérieure du réceptacle 9. à des fins de dispersion du parfum.

La figure 5 illustre le fonctionnement du système de l'ouverture de l'orifice de chaque réceptacle afin de permettre que la phéromone contenue dans celui-ci puisse se répandre vers l'extérieur du réceptacle.

Le moteur 19 entraîne un mouvement giratoire du plateau 17 qui est géré par le programme embarqué sur la carte à circuit imprimé12.

Toutes les cheminées des réceptacles sont recouvertes par une bande partiellement circulaire 20 de matière flexible, de type papier ou de matière synthétique. Celle-ci est enduite par en dessous d'un produit adhésif qui a la faculté de sceller de manière hermétique l'orifice supérieur 6 de chaque cheminée 4.

Une élément pince 21 qui est fixée au bras 14 pince une extrémité de la bande adhésive circulaire 20.

Lors d'un mouvement programmé du moteur 19, ce mouvement giratoire tel qu'indiqué par la flèche 22 décolle la bande adhésive partiellement circulaire et dégage en conséquence l'orifice supérieur de la cheminée 6 et permet dès lors la diffusion de la phéromone captive dans le réceptacle 5, vers l'extérieur de l'appareil.

La figure 6 montre le moteur 19 qui imprime la rotation de l'axe 18 est connecté à la carte à circuit imprimé 12 qui en assure la gestion par le biais d'un programme embarqué.

La communication à distance est assurée par un modem satellitaire 23, ainsi qu'un modem cellulaire 24. Le choix d'un mode de télécommunication est dépendant de la couverture locale GSM 44. Si elle est absente, le programme de gestion embarqué choisit le mode de télécommunication par voie satellitaire par exemple de type TDMA 25 afin de pouvoir communiquer avec un serveur 26 via un satellite qui assure la gestion du système dans sa totalité. Le système dans sa totalité est un ensemble des postes d'appâtage gérés.

La figure 7 montre une variante de poste d'appâtage destiné à piéger des insectes rampants. Pour ce faire, une rampe 27 permet l'accès aux insectes attirés dans le réceptacle 5, par la phéromone qui se dégage dans ce dernier. Le bout de la rampe 28 se termine par une languette flexible 29, enduite ou composée de matière de type polytétrafluoroéthylène ce qui entraîne les insectes à chuter à l'intérieur du réceptacle 5 par la force gravitationnelle.

Cette languette flexible permet de par sa forme en forme de langue mais ayant néanmoins une certaine rigidité de s'introduire dans l'orifice 30, après chaque mouvement giratoire du plateau.

Cette variante est également pourvue d'une bande adhésive circulaire 20 ainsi que d'une pince 21 qui dégage la phéromone, après chaque rotation partielle du plateau circulaire 17.

Dans cette variante, le senseur optique 13 , se trouve au dessus du cône inversé du réceptacle transparent.

La figure 8 montre une variante du poste d'appâtage destiné plus particulièrement à piéger des insectes de type moustique (culicidae) telles que aedes aegypti, aedes albopictus, anopheles, culex, phlebotominae ainsi que des types de mouche telles que musca domestica, mouche tsé-tsé, simulium damnosum, punaises

Ce poste d'appâtage est caractérisé par un récipient dont la partie inférieure 31 est remplie d'un liquide qui est caractérisé par son attractivité pour un certain type d'insecte. Le niveau de ce liquide est recouvert d'une face grillagée 32. La partie intérieure du récipient est partiellement pourvue d'une paroi translucide 33 qui est enduite d'une matière adhésive transparente.

Les insectes à piéger sont attirés par le liquide attractif et se collent à la paroi adhésive 33. Et s'introduisent dans le pièges est de forme cylindrique par l'orifice circulaire 36, suivant la direction qui est indiquée par la flèche 35. Le poste d'appâtage est recouvert par un cône 34. ayant comme fonction d'isoler l'intérieur du piège de lumières parasites venant de l'extérieur de celui-ci afin de ne pas fausser l'intensité de la source de lumière utilisée à des fins de comptage optique des insectes piégés. L'intérieur du piège est de couleur noire, également, afin de limiter cette lumière parasite.

Périodiquement les lampes de type LED 10 s'illuminent en même temps que se déclenche le senseur optique 13 et l'opacité des insectes piégés à la substance adhésive 33 est mesurée.

Le senseur optique 13 est fixé sur la paroi intérieure du conteneur cylindrique, opposée à la paroi translucide 33.

Les lampes 10, les piles ou batteries 16, ainsi que la carte à circuit imprimée 12 se trouvent dans un boîtier 11. analogue aux autres variantes de l'invention.

La gestion du comptage des insectes et la télécommunication des données sont assurées par le programme embarqué qui se trouve sur la carte à circuit imprimé, selon le même système, méthode et procédé de l'invention.

La figure 9 montre un système de diffusion d'un produit de lutte ou d'éradication. Ce poste d'appâtage est caractérisé par un réceptacle 37 qui contient le produit de traitement et est diffusé par un orifice 38 à l'aide d'une pompe 39 fonctionnant à l'aide du moteur 19.

Celui si est géré par le programme embarqué qui se trouve sur la carte à circuit imprimé 12. Ce programme est dirigé à distance par les instructions en provenance du serveur 26.

Dans une variante, le programme peut être géré sur la base des données générées localement sur la carte imprimée, dépendant du degré d'infestation d'insectes.

Dans une variante, le produit de lutte ou d'éradication est contenu dans une série de canules 43. Ceux-ci se déploient sur le terrain à traiter à l'aide d'un câble sans fin 41 sur lesquels sont accrochées les canules 43 contenant le produit de lutte ou d'éradication.

Les canules 43 sont attachés à distance régulière sur un câble sans fin dont une extrémité est pourvue d'une poulie 42 qu'on attache à un objet fixe quelconque 40, se trouvant à une certaine distance.

Suivant la commande spécifique en provenance du programme embarqué se trouvant su le carte à circuit imprimé 12 le moteur 19 entraîne le câble 41 qui libère les canules qui sont distribuées le long du câble sur le terrain à traiter.

Le produit se libère lorsque les canules sortent de la cavité 11.

La figure 10 et la figure 11 illustrent un second mode de réalisation d'un dispositif selon l'invention sous la forme d'une coupe vue de l'avant et de côté d'un boîtier 200 comportant 4 réceptacles 201 (201-a,b,c,d) pour insectes à piéger.

Les réceptacles ont la forme d'un prisme droit dont une paroi 202 est translucide et convexe et est enduite sur sa face intérieure d'un produit collant 203. Ces 4 réceptacles 201 sont agencés pour former un cylindre horizontal contenu dans le boîtier 200 et apte à être mis en rotation par un moteur 205. Les réceptacles sont ouverts à l'avant et à l'arrière permettant, à celui qui fait face à une ouverture approximativement triangulaire 212 du boîtier, de recevoir des insectes attirés par un produit attractif.

Les réceptacles sont aptes à tourner d'un quart de cercle lorsqu'une commande périodique correspondante est émise par le système, afin de présenter le réceptacle suivant face aux ouvertures antérieures et postérieures du boîtier 200. La paroi convexe translucide et collante de ce réceptacle fait face au compartiment fixe 204 comprenant des diodes 205 avec une face supérieure translucide, et émettant la lumière diffuse dans le réceptacle 201 qui y est exposée.

Un senseur optique 211 (photo-diode) est prévu au niveau de l'axe de rotation 210 pour mesurer l'intensité lumineuse dans le réceptacle ainsi exposé.

On notera que dans la présente variante le renouvellement du produit attactif qui n'est plus efficace se produit par le mouvement de rotation d'un quart de tour (flèche 207) imprimé à l'ensemble des réceptacles 201. Lors de cette rotation une languette tranchante 208 transperce un petit réceptacle 209 ou se trouve le produit attractif et qui est associé à chaque réceptacle 201. Le produit attractif (p.e. parfum) est ainsi libéré dans le réceptacle en communication avec l'extérieur par les ouvertures du boîtier.

## Revendications

1. Dispositif pour le contrôle d'au moins un poste (100, 200) d' appâtage pour insectes, en particulier pour nuisibles aux humains, animaux et végétaux, dans lequel le poste d' appâtage est muni :
- d'au moins un réceptacle (5, 200) muni d'au moins un orifice d'entrée pour insectes, le réceptacle contenant un appât et étant au moins partiellement transparent ou translucide,
- d'un dispositif d'illumination (10, 204) vers l'intérieur du, mais extérieur au, réceptacle,
- d'un circuit électronique, comportant entre autre une mémoire, **caractérisé en ce qu'**il comprend un senseur optique (13, 211) essentiellement opposé au dispositif d'illumination, et connecté au circuit électronique (12) apte à mesurer l'opacité provoquée par un insecte piégé dans le réceptacle et apte à mesurer l'opacité provoquée par plusieurs insectes piégés dans le réceptacle, la valeur correspondante étant transmise pour le traitement et l'analyse du statut du poste d' appâtage.

2. Dispositif selon la revendication 1 comprenant un module de télécommunication (23, 24, 25) ainsi qu'un circuit imprimé, comportant entre autre une mémoire et un processeur connecté audit moyen de télécommunication.

3. Dispositif selon la revendication précédente dans lequel la transmission de la valeur est effectuée par le moyen de télécommunication à un poste de contrôle et/ou de commande, éventuellement sous la forme de serveur internet, pour procéder à ladite évaluation de la présence et/ou du nombre d'insectes piégés dans ledit réceptacle.

4. Dispositif selon la revendication 1, 2 ou 3 dans lequel il y a plusieurs réceptacles (5, 201), de préférence contenus dans un boîtier (15, 200).

5. Dispositif selon la revendication précédente comprenant un moyen pour que les réceptacles se présentent successivement et automatiquement entre le senseur (211) et le dispositif d'illumination (204) .

6. Dispositif selon la revendication précédente dans lequel les réceptacles sont placés autour d'un axe (17, 210) apte à être entraîné par un moteur (19) commandé par le circuit électronique (12) selon un programme.

7. Dispositif selon n'importe laquelle des revendications précédentes **caractérisé en ce qu'**au moins une partie de la paroi intérieure du ou des réceptacles est recouverte d'une substance dérapante ou collante apte à piéger les insectes.

8. Dispositif selon n'importe laquelle des revendications précédentes dans lequel le ou les réceptacles contiennent une phéromone, qui peut être intégrée dans la matière constituant ledit réceptacle.

9. Dispositif selon la revendication précédente dans lequel chaque réceptacle contient une phéromone spécifique.

10. Dispositif selon n'importe laquelle des revendications 2 à 9 dans lequel le moyen de télécommunication est un module de télécommunication de téléphonie mobile autonome, qui peut se composer d'un modem de téléphonie cellulaire, de communication satellitaire ou de télécommunication sans fil.

11. Dispositif selon n'importe laquelle des revendications précédentes dans lequel il est prévu une rampe latérale (27) par laquelle les insectes rampants peuvent s'introduire dans le poste d' appâtage avant de tomber dans le réceptacle.

12. Méthode de contrôle d'au moins un poste d' appâtage comprenant un dispositif selon n'importe laquelle des revendications précédentes.

## Patentansprüche

1. Vorrichtung für die Kontrolle von wenigstens einer Köderstation (100, 200) für Insekten, insbesondere für Schädlinge gegenüber Menschen, Tieren und Pflanzen, wobei die Köderstation versehen ist mit:
- wenigstens einem Behälter (5, 200), der mit wenigstens einer Eingangsöffnung für Insekten versehen ist, wobei der Behälter einen Köder enthält und wenigstens teilweise durchsichtig oder durchscheinend ist,
- eine Beleuchtungsvorrichtung (10, 204) zum Innern, jedoch an der Außenseite des Behälters,
- eine elektronische Schaltung, umfassend unter anderem einen Speicher, **dadurch gekennzeichnet, dass** sie einen optischen Sensor (13, 211) umfasst, der im Wesentlichen der Beleuchtungsvorrichtung entgegengesetzt ist und an die elektronische Schaltung (12) angeschlossen ist, die geeignet ist, die Blickdichte zu messen, die von einem in dem Behälter gefangenen Insekt hervorgerufen ist und geeignet ist, die Blickdichte zu messen, die von mehreren in dem Behälter gefangenen Insekten hervorgerufen ist, wobei der für die Verarbeitung und die Analyse des Status der Köderstation entsprechende Wert übertragen ist.

2. Vorrichtung gemäß Anspruch 1, umfassend ein Telekommunikationsmodul (23 24, 25) sowie eine gedruckte Schaltung, umfassend unter anderem einen Speicher und einen Prozessor, der an das genannte Telekommunikationsmittel angeschlossen ist.

3. Vorrichtung gemäß dem voranstehenden Anspruch, wobei die Übertragung des Wertes durch das Telekommunikationsmittel auf eine Kontroll- und /oder Steuerstation eventuell in Form eines Internetservers durchgeführt ist, um die genannte Beurteilung des Vorhandenseins und / oder Anzahl von in dem genannten Behälter gefangenen Insekten vorzunehmen.

4. Vorrichtung gemäß Anspruch 1, 2 oder 3, wobei mehrere Behälter (5, 201), die bevorzugt in einem Gehäuse (15, 200) enthalten sind, vorhanden sind.

5. Vorrichtung gemäß dem voranstehenden Anspruch, umfassend ein Mittel, damit die Behälter nacheinander und automatisch zwischen dem Sensor (211) und der Beleuchtungsvorrichtung (204) vorhanden sind.

6. Vorrichtung gemäß dem voranstehenden Anspruch, wobei die Behälter um eine Achse (17, 210) angeordnet sind, die geeignet ist, durch einen Motor (19) angetrieben zu sein, der von der elektronischen Schaltung (12) gemäß einem Programm gesteuert ist.

7. Vorrichtung gemäß irgendeinem der voranstehenden Ansprüche, **dadurch gekennzeichnet, dass** wenigstens ein Teil der Innenwand des oder der Behälter(s) mit einer rutschigen oder klebrigen Substanz abgedeckt ist, die geeignet ist, die Insekten zu fangen.

8. Vorrichtung gemäß irgendeinem der voranstehenden Ansprüche, wobei der oder die Behälter ein Pheromon beinhaltet / beinhalten, das in das den genannten Behälter bildende Material integriert sein kann.

9. Vorrichtung gemäß dem voranstehenden Anspruch, bei dem jeder Behälter ein spezifisches Pheromon enthält.

10. Vorrichtung gemäß irgendeinem der Ansprüche 2 bis 9, bei der das Telekommunikationsmittel ein Telekommunikationsmittel der autonomen mobilen Telefonie, die sich aus einem Zelltelefon-Modem zusammensetzen kann, zur Satelliten- oder drahtlosen Telekommunikation ist.

11. Vorrichtung gemäß irgendeinem der voranstehenden Ansprüche, bei der eine seitliche Rampe (27) vorgesehen ist, durch die die kriechenden Insekten in die Köderstation eindringen können, bevor sie in den Behälter fallen.

12. Kontrollverfahren mittels einer Köderstation, umfassend eine Vorrichtung gemäß irgendeinem der voranstehenden Ansprüche.

## Claims

1. A device for checking at least one bait station for insects (100, 200), especially pests for humans, animals and plants , wherein the at least one bait station comprises :
- at least one container (5, 200) comprising at least one entrance orifice for insects, wherein the at least one container contains bait and is at least partially transparent or translucent;
- a lighting device (10, 204) disposed toward the inside of, but on the outside of, the at least container;
- a printed circuit board, comprising a memory, **characterized in that** it comprises an optical sensor (13, 211) disposed generally opposite the lighting device, and connected to the printed circuit board (12), that measures the opacity caused an insect trapped in the container and that measures the opacity caused by several insects trapped in the container, the corresponding value being sent for checking and control the status of the bait station..

2. The device according to Claim 1 including a telecommunications means (23, 24, 25) as well as a circuit board, including a memory and a processor connected to said telecommunications means.

3. The device according to preceding claim wherein the sending of the value is carried out by the telecommunications means to a checking and/or control station, eventually in the form of an internet server, to conduct said evaluation of the presence and/or number of insects trapped in said container.

4. The device according to claims 1, 2 or 3 wherein there are several containers (5, 201), preferably included in a housing (15, 200).

5. The device according to the preceding claim comprising a mean configured so that the containers are successively and automatically presented by the platform between the sensor (211) and the lighting device (204).

6. The device according to preceding claim wherein the containers are disposed around an axis (17, 210) able to be driven by a motor (19) controlled by the circuit board (12) in accordance with a program.

7. The device according to any one of the preceding claims **characterized in that** at least part of the inner wall of the at least one container is covered with a sticky or adhesive substance able to trap the insects.

8. The device according to any one of the preceding claims wherein the at least one container contains a pheromone, said pheromone can be integrated into material making up the at least one container.

9. The device according to preceding claim wherein each container contains a specific pheromone.

10. The device of any preceding claims 2 to 9 wherein the telecommunication mean is an autonomous mobile telephone module which can comprise a cellular telephone module,, a satellite communication module, and a wireless telecommunication module.

11. The device according to any one of the preceding claims wherein the insects can enter the bait station via a lateral ramp (27) before falling into the at least one container.

12. A method for checking at least one bait station comprising a device according to any preceding claims.
